# EUROPEAN PATENT SPECIFICATION

(11) **EP 2 697 911 B1**
(45) Date of publication and mention of the grant of the patent: **14.03.2018**
(21) Application number: 11863654.7
(22) Date of filing: 14.04.2011
(51) Int. Cl.: H04W 72/12, H04B 7/024, H04L 5/00

(54) **JOINT TRANSMISSION CoMP WITH SINGLE CARRIER CELL AGGREGATION**
GEMEINSAME CoMP-ÜBERTRAGUNG MIT EINZELTRÄGER-ZELLAGGREGATION
TRANSMISSION CONJOINTE CoMP AVEC AGRÉGATION DE CELLULES À PORTEUSE UNIQUE

(43) Date of publication of application: 19.02.2014
(73) Proprietor: Nokia Solutions and Networks Oy, 02610 Espoo (FI)
(72) Inventor: RIBEIRO, Cassio Barboza, FI-02210 Espoo (FI); HUGL, Klaus, A-1070 Wien (AT); LUNTTILA, Timo, FI-02200 Espoo (FI)
(74) Representative: Nokia EPO representatives
(86) International application number: PCT/FI2011/050329
(87) International publication number: WO 2012/140309

(56) References cited:
- WO-A1-2010/078855
- WO-A1-2010/093301
- US-A1- 2010 173 660
- US-A1- 2010 173 660
- US-A1- 2010 238 821
- US-A1- 2010 238 821
- US-A1- 2011 034 175
- US-A1- 2011 034 175

## Description

### TECHNICAL FIELD:

The teachings in accordance with the exemplary embodiments of this invention relate generally to wireless communications and, more specifically, relate to enhanced signaling for joint coordinated multi-point transmission and reception in wireless communications.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- 3GPP: third generation partnership project
- CA: carrier aggregation
- CC: component carrier
- CIF: carrier indicator field
- CoMP: coordinated multi point transmission/reception
- CRS: cell-specific reference signals
- CSI: channel state information
- CSI-RS: channel state information reference signals
- DCI: downlink control information
- DL: downlink (eNB towards UE)
- DM-RS: (UE-specific) demodulation reference signals
- eNB: evolved UTRAN Node B (base station/access node)
- HARQ: hybrid automatic repeat request
- ID: identity
- JT: joint transmission
- LTE: long term evolution (E-UTRAN or 4G)
- MBSFN: multi-media broadcast over a single frequency network
- PDCCH: physical downlink control channel
- PDSCH: physical downlink shared channel
- PRS: positioning reference signals
- PUCCH: physical uplink control channel
- RE: resource element
- RX: receive
- TP: transmission point
- TX: transmit
- UE: user equipment
- UTRAN: universal terrestrial radio access network

Coordinated multi-point (CoMP) transmission and reception is one of the investigated technologies in 3GPP LTE-A. CoMP has been proposed to most specifically to enhance cell-edge data rates in order to create a more uniform data rate experience for an end-user over an entire cell area. The CoMP techniques involve increased collaboration between different transmission/reception points such as base station nodes (eNodeBs) for downlink transmission to the user equipment and for uplink reception from the user equipment.

Already in 3GPP LTE Rel. 10 a CoMP related study item, previously put on hold, has been restarted to investigate different scenarios such as a CoMP solution focusing on heterogeneous networks involving the collaboration/cooperation between different transmission points such as a macro-eNB with high transmission power and several lower power transmission points. within the macro-eNB coverage. By example a macro eNB is in the position of a traditional cellular access node and the lower power transmission points may be LTE hotspots, Micro/Pico/Femto eNbs or the macro eNB's remote radio heads.

Support for carrier aggregation is included in the 3GPP specifications (Rel-10). In one implementation of carrier aggregation up to 5 component carriers can be aggregated together to increase the system bandwidth.

It has been suggested that carrier aggregation signaling as defined in LTE Rel-10 can be used to support CoMP. However, there are problems associated with this approach; restrictions in the use of the signaling are seen to lead to increased overhead and degraded performance and CA signaling cannot directly support a joint transmission CoMP scenario in which a single data flow to the UE is transmitted from multiple transmission points (cells). Exemplary embodiments of this invention detailed below provide a more efficient approach to overcome these restrictions to perform joint transmission CoMP.

US 2011/034175 A1 discusses about a method for implementing coordinated multi-point (CoMP) in evolved universal terrestrial radio access network.

WO 2010/078855 A1 discusses about a downlink transmission method in a Coordinated Multi-Point (CoMP) transmission system.

### SUMMARY:

In an exemplary embodiment of the invention there is an apparatus, comprising: at least one processor; and at least one memory including computer program code, where the at least one memory and the computer program code are configured, with the at least one processor, to cause the apparatus to at least: determine each transmission point participating in a joint cooperative multi-point transmission to a user equipment, send a downlink message to the user equipment which identifies each of the transmission points, and which schedules for the user equipment downlink resources on which each of the transmission points are to send downlink data to the user equipment in the joint cooperative multi-point transmission, and send a transmission to the user equipment on one of the downlink resources in conjunction with each other transmission point's transmission to the user equipment.

In an exemplary embodiment of the invention there is method, comprising: determining each transmission point participating in a joint cooperative multi-point transmission to a user equipment, sending a downlink message to the user equipment which identifies each of the transmission points, and which schedules for the user equipment downlink resources on which each of the transmission points are to send downlink data to the user equipment in the joint cooperative multi-point transmission, and sending a transmission to the user equipment on one of the downlink resources in conjunction with each other transmission point's transmission to the user equipment.

In an exemplary embodiment of the invention there is an apparatus, comprising: means for determining each transmission point participating in a joint cooperative multi-point transmission to a user equipment, means for sending a downlink message to the user equipment which identifies each of the transmission points, and which schedules for the user equipment downlink resources on which each of the transmission points are to send downlink data to the user equipment in the joint cooperative multi-point transmission, and means for sending a transmission to the user equipment on one of the downlink resources in conjunction with each other transmission point's transmission to the user equipment.

In an exemplary embodiment of the invention there is an apparatus, comprising: at least one processor, and at least one memory including computer program code, where the at least one memory and the computer program code are configured, with the at least one processor, to cause the apparatus to at least: receive a downlink message which identifies each of transmission points participating in a joint cooperative multi-point transmission with a user equipment, and which schedules downlink resources on which the user equipment is to receive downlink data from the transmission points for the joint cooperative multi-point transmission, and receive, at the user equipment, a transmission on one of the downlink resources in conjunction with the other transmission point's transmission.

In still another exemplary embodiment of the invention there is an apparatus, comprising: means for receiving a downlink message which identifies each of transmission points participating in a joint cooperative multi-point transmission with a user equipment, and which schedules downlink resources on which the user equipment is to receive downlink data from the transmission points for the joint cooperative multi-point transmission, and means for receiving, at the user equipment, a transmission on one of the downlink resources in conjunction with the other transmission point's transmission.

In yet another exemplary embodiment of the invention there is a method, comprising: receiving a downlink message which identifies each of transmission points participating in a joint cooperative multi-point transmission with a user equipment, and which schedules downlink resources on which the user equipment is to receive downlink data from the transmission points for the joint cooperative multi-point transmission, and receiving, at the user equipment, a transmission on one of the downlink resources in conjunction with the other transmission point's transmission.

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 illustrates a network deployment scenario with four micro transmission points under the coverage area of one macro cell;
Figure 2 illustrates an example of two cooperating cells under the same eNodeB performing CoMP transmission in accordance with the exemplary embodiments of the invention;
Figure 3A illustrates resource element arrangement of a PDCCH/PDSCH of a generic (single cell) transmission;
Figure 3B illustrates resource element arrangements of a PDCCH/PDSCH of a joint transmission in accordance with certain exemplary embodiments of the invention;
Figure 4A illustrates a simplified block diagram of various electronic devices that are suitable for use in practicing the exemplary embodiments of this invention;
Figure 4B illustrates a more particularized block diagram of a user equipment such as that shown at Figure 4A; and
Figures 5 and 6 are logic flow diagrams that each illustrate the operation of a method, and a result of execution of computer program instructions embodied on a computer readable memory, in accordance with the exemplary embodiments of this invention.

### DETAILED DESCRIPTION:

Carrier aggregation (CA) signaling as defined in LTE Rel-10 may be used for CoMP with only minor modifications to a physical layer. In CA terminology, the macro cell is analogous to the primary component carrier whereas the micro cells correspond to secondary component carriers (CCs).

But this approach does not directly support joint transmission CoMP. In principle this may be resolved by simply transmitting the same data to the UE from different multiple cells, but this leads to a few major drawbacks such as:
- increased PDCCH overhead since the DL grant used for assigning the physical resources needs to be provided for each of the cells
- collisions of data and CRS, etc. resulting from the different cells having degraded performance due to a need for puncturing or nulling data at the receiver
- increased UE complexity since each of the DL transmissions would have a distinct HARQ process.

Exemplary embodiments of the invention overcomes these restrictions and performs joint transmission CoMP by enhancing and reusing certain carrier aggregation principles.

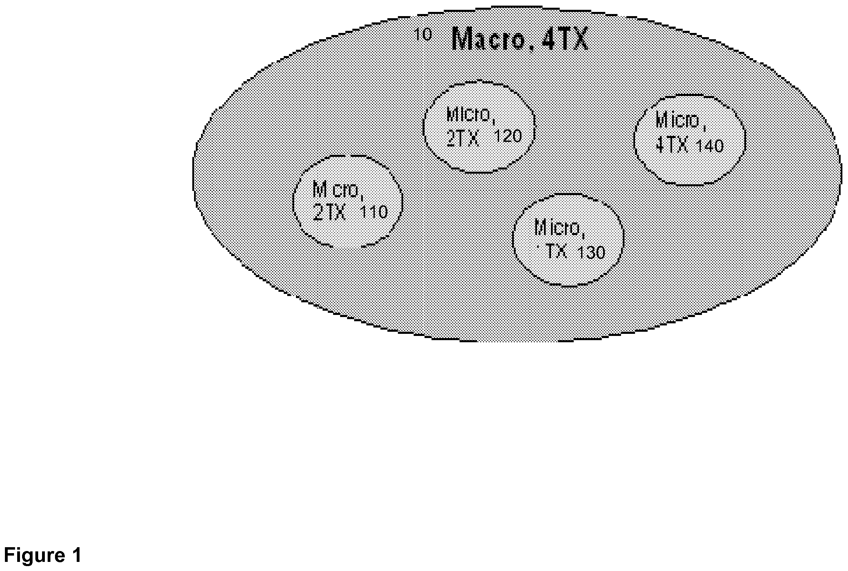

One example of a single carrier cell aggregation CoMP scenario of interest is depicted in Figure 1 which illustrates a coverage area of one macro eNB 10 with 4 TX antennas and in this coverage area there are altogether four micro-cell/hotspot 110, 120, 130, 140 type of transmission points, each having some (1, 2, or 4) TX antennas and a respective number of CSI-RS ports configured. In this concept each of the transmission points is a cell of their own, each having a distinct Cell ID.

Exemplary embodiments of the invention include a method for a user equipment to perform reception of a joint transmission CoMP operation with one or more cells (e.g. macro- and micro-cells), as illustrated in Figure 1, by maximally reusing certain carrier aggregation principles. Highlights of these non-limiting embodiments are summarized below:
- Different cells of a communications network communicate cell-specific parameters with each other. The communications can include a cell ID impacting the scrambling sequence initialization, a CRS frequency shift, a CSI-RS configuration, etc.
- A UE of the communications network receives *a single* PDCCH from an eNB indicating a joint transmission for the user equipment from multiple cells
   ∘ In the PDCCH DL DCI format there is an indication of the cells which are taking part in the joint transmission
   ∘ In one exemplary case this indication is an extension of the Carrier Indicator Field (CIF)
- After receiving the DCI grant in the PDCCH the UE knows which cells will take part in the joint transmission
- The DCI grant also indicates (implicitly or explicitly) for the UE which cell ID is used in the joint transmission for scrambling & sequence initialization, CRS and DM-RS positions & sequences, etc. so the UE can use the same (single) cell-ID for the same purpose for its received messages
- When transmitting the DL data, each transmission point participating in the joint transmission rate matches the data around the common reference signals (CRS and other reference signals when present, e.g. positioning reference signals PRS and CSI-RS, which in one embodiment are given by the CSI-RS muting/zero-transmit power CSI-RS pattern defined in Rel. 10) of *all* the participating cells
- When receiving the DL data the UE knows to do the same rate matching, (i.e. the UE knows that the DL data is not overlapping with the CRS and CSI-RS of any of the cells participating in the joint transmission).

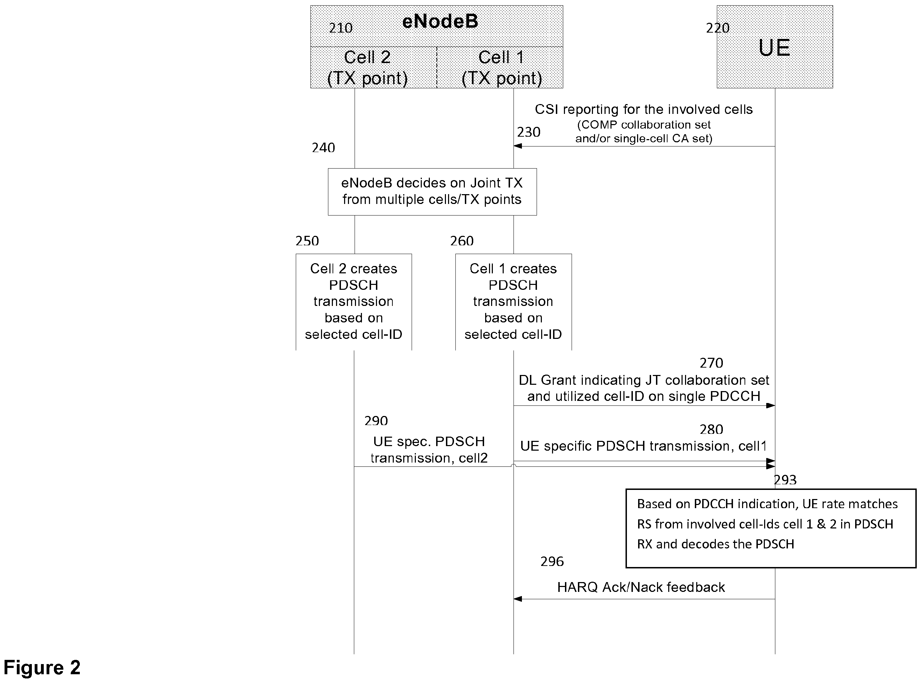

Figure 2 illustrates the above described operation. In this example there are two cooperating cells 1 and 2 under the same macro eNB (eNodeB) 210. Cells 1 and 2 operate in a similar fashion as carrier aggregation, but adapted for a CoMP transmission with the UE 220. At message 230 the UE 220 is reporting channel state information (CSI) for the involved cells. The reporting includes CSI for CoMP collaboration set and/or a single carrier aggregation (CA) set. In block 240 the eNB 210 decides on joint transmission from multiple cells and or transmission points (e.g., remote radio heads). At block 250 Cell 2 creates a physical downlink shared channel (PDSCH) transmission based on a selected cell-ID (e.g., its own) including rate-matching around the resource elements occupied by the common reference signals, of both Cell 1 and Cell 2, i.e. common reference signals as an umbrella comprising CRS, PRS, CSI-RS etc. At block 260 Cell 1 creates a physical downlink shared channel (PDSCH) transmission based on a selected cell-ID (same selected cell-ID as in 250 - e.g., its own) including rate-matching around the resource elements occupied by the common reference signals of both Cell 1 and Cell 2. Message 270 is the single PDCCH which Cell 1 sends to the UE 220, and which indicates the JT collaboration set and possibly also which one of the cell-IDs the Cells 1 and 2 may have used at blocks 250 and 260 to create the not-yet-sent PDSCHs. Then Cell 1 sends to the UE 220 the PDSCH transmission 280 which Cell 1 created at block 260, and jointly Cell 2 sends to the same UE 220 the PDSCH transmission 290 which Cell 2 created at block 250. At block 293, based on PDCCH indication, the UE 220 rate matches the data it received in the PDSCHs 280, 290 around the common reference signals (i.e. at least one of cell-specific reference signals CRS, MBSFN reference signals, positioning reference signals PRS and CSI-RS) of Cell 1 and Cell 2, which the UE 220 obtained in the PDCCH 270 it received from cell 1, and decodes the PDSCH based on the scrambling, DM-RS etc. given by the one, single cell ID. At block 296 the UE 220 sends a hybrid automatic repeat request to Cell 1 for the combined PDSCH consisting of PDSCH 280 that Cell 1 sent and PDSCH 290 that Cell 2 sent, but the UE 220 does not separately send a HARQ response to Cell 2 for the PDSCH 290 that Cell 2 sent. Cell 1 gets the HARQ response 296 because the PUCCH used for signaling the A/N is located on Cell 1.

It is noted that CRS is **not** used as an acronym for common reference signals but as an acronym for cell-specific reference signals, this is other than demodulation reference signals (DM-RS) as such, which are transmission specific and rate-matching which is also transmission specific. Further, in accordance with the embodiments of the invention the term common reference signal, as used in the application, can cover any or all of cell specific reference signals (CRS), positioning reference signals (PRS), channel state information reference signal (CSI-RS), and multicast broadcast over a Single Frequency Network reference signal (MBSFN RS), besides other related terms.

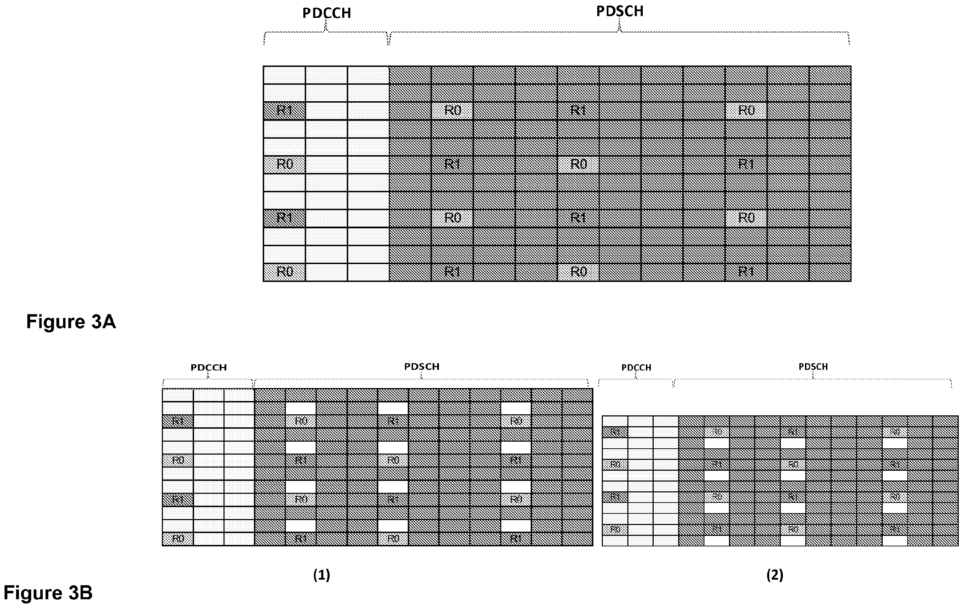

The above mentioned rate-matching is exemplified in Figures 3A and 3B for a single physical resource block (PRB). In Figure 3B there are two cells involved with different cell-IDs.

Figure 3A illustrates how a conventional single cell transmission (as per 3GPP Releases 8, 9, and 10) is structured with respect to CRS and the PDSCH muting around a configured CRS pattern. For clarity, other common reference signals like CSI-RS, PRS, MBSFN RS - as well as DM-RS are not shown in these figures, but rate matching is also happening for these in the PDSCH. In Figure 3A, the darker shading shows the REs used for PDSCH (including related CSI-RS and DM-RS) and the rate matching around the two configured CRS ports (R0 & R1).

Regarding Figure 3B, for joint transmission with two or more cells, in these embodiments there is a need to rate-match around the common reference signal patterns of the different involved cells with individual cell-IDs in addition to the CSI-RS given by e.g. the CSI-RS muting pattern and DM-RS. The rate matching illustrated in Figure 3B part (1) is for cell-ID1 and that illustrated at Figure 3B part (2) is for cell-ID2 is shown for the example of CRS only, which is a subset the common reference signals for cell-ID1 and cell-ID2. In Figure 3B, the unshaded cells show the REs that are left unused in the illustrated PDSCH transmissions in order to enable rate-matching of the example CRS patterns of the other cell involved in the joint PDSCH transmission since each involved cell has a different cell-ID (and related CRS patterns and frequency shifts configured on different REs).

In accordance with the embodiments of the invention, the UE becomes aware of the pending joint transmission by signaling it receives in the DL grant/PDCCH indicating which cells will be involved in the JT CoMP. In one embodiment, the indication can be done by a bitmap and a related direct mapping to set of cells. Alternatively, the respective cell-IDs and corresponding REs used for common reference signal transmission may be signaled directly. Further, the UE is implicitly aware of the rate-matching on the PDSCHs around the common reference signals, and is able to take this into account in the PDSCH decoding process.

The definition of the cell (cell ID) according to which the scrambling (DM-RS transmission, etc.) is done in one embodiment is the cell-ID of the eNB transmitting the DL grant to the user equipment on the PDCCH. This is the example shown at Figure 2, and its advantage is that it is seen to be the simplest and most straightforward solution. In an alternative embodiment the cell-ID defining the DM-RS transmission as well as scrambling etc. is the smallest value of *ServCellIndex* which is included in the set of cells collaborating in the JT, which the UE also learns from the PDCCH. In yet another embodiment the cell-ID defining the DM-RS transmission and data scrambling etc. is signalled to the UE separately.

In accordance with exemplary embodiments of the invention as detailed above at Figure 2, the PDCCH DL assignment is modified to include an indication of which cells are taking part in a joint CoMP operation, and this modified PDCCH is signaled to another device, such as a user equipment.

In LTE Release 10, for carrier aggregation purposes a 3-bit CIF was introduced to indicate to which (single) carrier/cell the specific resource grant in the PDCCH refers. Being 3 bits the CIF is in principle capable of indicating one of up to eight component carriers/cells, although the LTE Release 10 physical layer specifications provide support for only up to five CCs. Therefore, there are a few bit values in the CIF which are available for other uses.

However, for the above-described JT CoMP operation the use of the CIF for identifying the participating cells may not always be sufficient because multiple cells need to be identified at the same time. In accordance with the above teachings for identifying all JT CoMP cooperating cells in the DL resource grant/PDCCH, following are various implementations for how to modify the PDCCH for that purpose:
- Define a bitmap of as many bits as there are cooperating (e.g., joint-transmission) cells. By toggling the bits in the bitmap the cells participating in the joint transmission can be indicated with full flexibility. For example, with 5 bits it is possible to fully and flexibly indicate any combination of up to five cells. More or less bits may be used.
- Re-define the contents of the CIF, for example utilize some of the codepoints that are redundant in a given carrier aggregation configuration for indicating cooperating joint-transmission COMP cells. If there are for example 3 cooperating cells to consider it would be possible to reinterpret the CIF as a bitmap, hence providing full flexibility in the JT scheduling.

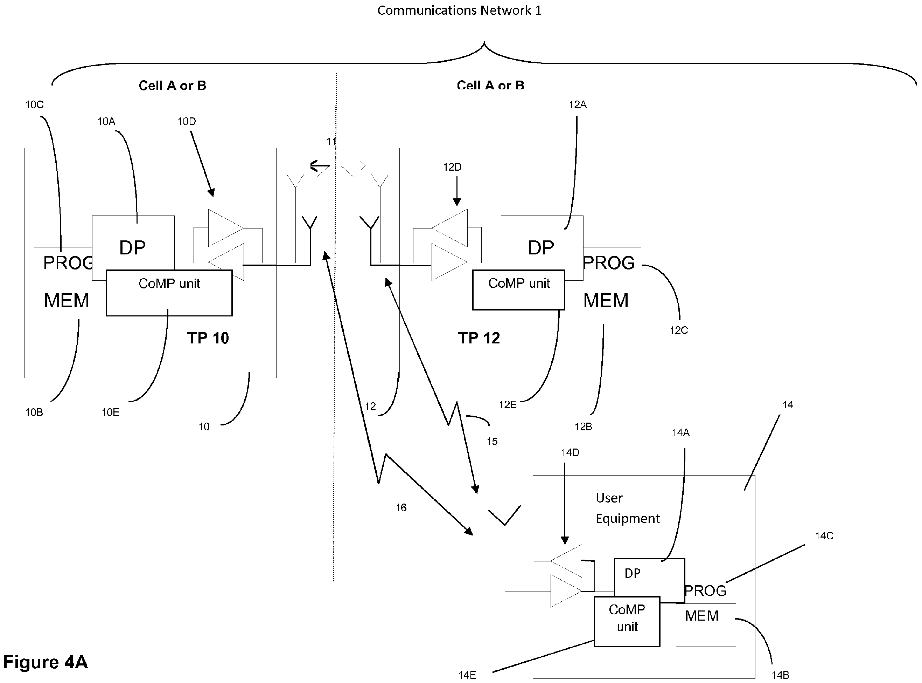

Figures 4A-B there are described exemplary and non-limiting apparatus/devices which may be used to practice and/or to embody various aspects of these inventive solutions.

In Figure 4A illustrates, as an example, a communications network 1 representative of devices suitable for performing the method in accordance with the exemplary embodiments of the invention. In Figure 4A there is an TP (transmission point) 10 and a TP 12. The TP 12 and the TP 10 may be in separate cells such as Cell A and Cell B or they may be in the same cell. It is noted that these cells may be both under the control of a single base station. The TPs 10 and 12 may be adapted for communication over links such as optical fiber links or wireless links (e.g., 11, 15, and 16). It will be appreciated that the functions of the described TP 12 may be conducted by a relay node, such as a type 1 relay in LTE-A which has control over its own cell and which appears to the UE 14 or the TP 12 and 14 as the other device. The communications network may include a network control element (not illustrated) that may include the MME/S-GW functionality, and which provides connectivity with another broader network, such as a telephone network and/or a data communications network (e.g., the internet). The TP 12 also includes a controller, such as a computer or a data processor (DP) 12A, a computer-readable memory medium embodied as a memory (MEM) 12B that stores a program of computer instructions (PROG) 12C, and a suitable RF transceiver 12D for communication with the UE 10 via one or more antennas. The eNB 12 may be coupled via a data / control path (not shown) to an NCE. The TP 12 is coupled to the TP 10 via data / control path 11, which may be implemented as an interface. The TP 10 also includes a controller, such as a computer or a data processor (DP) 10A, a computer-readable memory medium embodied as a memory (MEM) 10B that stores a program of computer instructions (PROG) 10C, and a suitable RF transceiver 10D for communication with the UE 14 via one or more antennas. The TP 10 may be coupled via a data / control path (not shown) to an NCE. The TP 10 is coupled to the TP 12 via data / control path 11, which also may be implemented as an interface. It is noted that any or the data/control paths or links may be wired or wireless. Further, it is noted that at least one of the TP 10 or TP 12 may be a base station such as an eNB.

Further, illustrated in Figure 4A there is a UE 14. The UE 14 includes a controller, such as a computer or a data processor (DP) 14A, a computer-readable storage medium embodied as a memory (MEM) 14B that stores a program of computer instructions (PROG) 14C, and a suitable radio frequency (RF) transceiver 14D for bidirectional wireless communications with either the TP 12 and/or TP 10 via one or more antennas and the via data / control paths 15 and 16. It is noted that any or the data/control paths or links may be wired or wireless.

At least one of the PROGs 10C, 12C, and 14C is assumed to include program instructions that, when executed by the associated DP, enable the base station and the device to operate in accordance with the exemplary embodiments of this invention, as will be discussed below in greater detail.

That is, the exemplary embodiments of this invention may be implemented at least in part by computer software executable by the DP 14A of the UE 14 and/or by the DP 12A of the TP 12, and/or by DP 10A of the eNB 10 or by hardware, or by a combination of software and hardware (and firmware).

For the purposes of describing the exemplary embodiments of this invention the UE 14 may be assumed to also include a CoMP unit 14E, and the TP 12 and the TP 10 may include a CoMP unit 12E and 10E, respectively. These processing units 10E, 12E, and 14E generate at least the CoMP indication, the PDCCH, PDSCH, cell IDs, and perform operations related to scrambling and rate-matching according to the exemplary and non-limiting embodiments detailed below from which the scrambling code is generated. While shown as separate and distinct units 10E, 12E, and 14E in Figure 4A, the physical processor which work to operate each CoMP to perform the exemplary embodiments of the invention. Further, certain embodiments at least some of the embodiments may be performed by another processor or other inferior/subordinate/slaved processors, such as the DP 10A, 12A, and 14A, within the same or another apparatus/device, such as 10, 12, 14.

In general, the various embodiments of the UE 14 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The computer readable MEMs 10B, 12B, and 14B may be of any type suitable to the local technical environment and may be implemented using any suitable data storage technology, such as semiconductor based memory devices, flash memory, magnetic memory devices and systems, optical memory devices and systems, fixed memory and removable memory. The DPs 10B, 12B, and 14B may be of any type suitable to the local technical environment, and may include one or more of general purpose computers, special purpose computers, microprocessors, digital signal processors (DSPs) and processors based on a multicore processor architecture, as non-limiting examples.

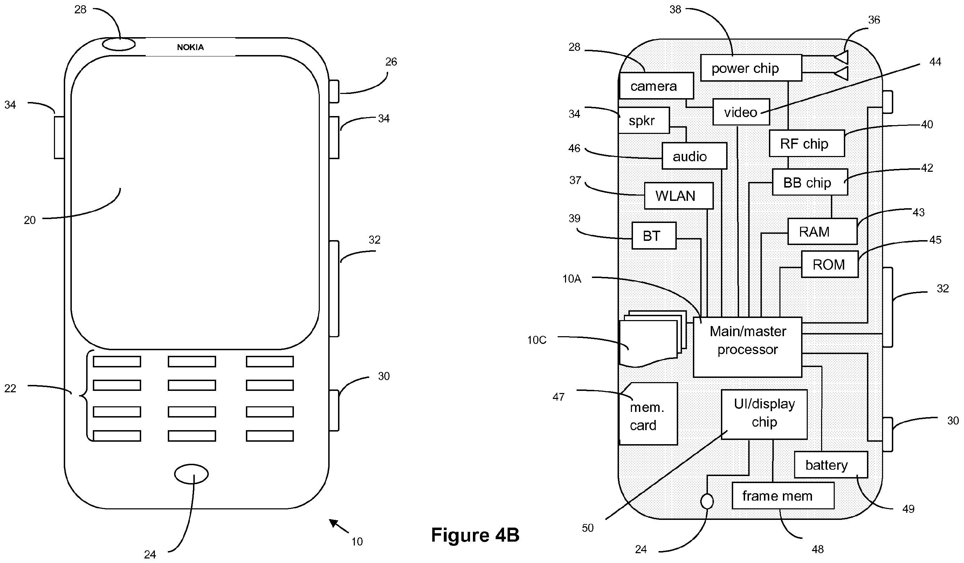

Figure 4B illustrates further detail of an exemplary UE in both plan view (left) and sectional view (right), and the invention may be embodied in one or some combination of those more function-specific components. At Figure 4B the UE 14 has a graphical display interface 20 and a user interface 22 illustrated as a keypad but understood as also encompassing touch-screen technology at the graphical display interface 20 and voice-recognition technology received at the microphone 24. A power actuator 26 controls the device being turned on and off by the user. The exemplary UE 10 may have a camera 28 which is shown as being forward facing (e.g., for video calls) but may alternatively or additionally be rearward facing (e.g., for capturing images and video for local storage). The camera 28 is controlled by a shutter actuator 30 and optionally by a zoom actuator 32 which may alternatively function as a volume adjustment for the speaker(s) 34 when the camera 28 is not in an active mode.

Within the sectional view of Fig. 4B are seen multiple transmit/receive antennas 36 that are typically used for cellular communication. The antennas 36 may be multi-band for use with other radios in the UE. The operable ground plane for the antennas 36 is shown by shading as spanning the entire space enclosed by the UE housing though in some embodiments the ground plane may be limited to a smaller area, such as disposed on a printed wiring board on which the power chip 38 is formed. The power chip 38 controls power amplification on the channels being transmitted and/or across the antennas that transmit simultaneously where spatial diversity is used, and amplifies the received signals. The power chip 38 outputs the amplified received signal to the radio-frequency (RF) chip 40 which demodulates and down converts the signal for baseband processing. The baseband (BB) chip 42 detects the signal which is then converted to a bit-stream and finally decoded. Similar processing occurs in reverse for signals generated in the apparatus and transmitted from it.

An exemplary UE 14 may also include a camera 28 and image/video processor 44, a separate audio processor 46 for outputting to speakers 34 and for processing inputs received at the microphone 24. The graphical display interface 20 is refreshed from a frame memory 48 as controlled by a user interface chip 50 which may process signals to and from the display interface 20 and/or additionally process user inputs from the keypad 22 and elsewhere. Certain embodiments of the UE 14 may also include one or more secondary radios such as a wireless local area network radio WLAN 37 and a Bluetooth® radio 39, which may incorporate an antenna on-chip or be coupled to an off-chip antenna. Throughout the apparatus are various memories such as random access memory RAM 43, read only memory ROM 45, and in some embodiments removable memory such as the illustrated memory card 47 on which the various programs 14C are stored. All of these components within the UE 14 are normally powered by a portable power supply such as a battery 49.

The aforesaid processors 10E/12E/14E, 38, 40, 42, 44, 46, 50, if embodied as separate entities in a UE 14 or TP 12 or TP 10, may operate in a slave relationship to the main processor 10A, 12A, and 14E which may then be in a master relationship to them. Any or all of these various processors of Figure 4B access one or more of the various memories, which may be on-chip with the processor or separate therefrom. Similar function-specific components that are directed toward communications over a network broader than a piconet (e.g., components 36, 38, 40, 42-45 and 47) may also be disposed in exemplary embodiments of the access nodes, such as 10 and 12, which may have an array of tower-mounted antennas rather than the two shown at Figure 4B.

Note that the various chips (e.g., 10E/12E/14E, 38, 40, 42, etc.) that were described above may be combined into a fewer number than described and, in a most compact case, may all be embodied physically within a single chip.

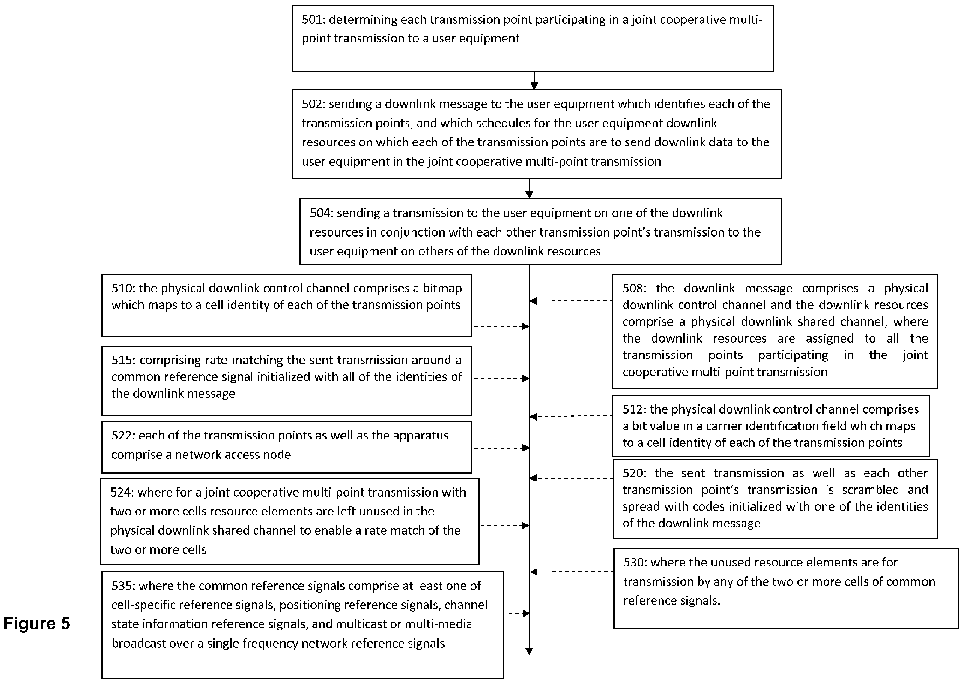

In Figure 5 is a block diagram which illustrates a method and operations of an apparatus according to the exemplary embodiments of the invention. At block 501 there is determining each transmission point participating in a joint cooperative multi-point transmission to a user equipment. In block 502 there is sending a downlink message to the user equipment which identifies each of the transmission points, and which schedules for the user equipment downlink resources on which each of the transmission points are to send downlink data to the user equipment in the joint cooperative multi-point transmission. Further, at block 504 there is sending a transmission to the user equipment on one of the downlink resources in conjunction with each other transmission point's transmission to the user equipment on others of the downlink resources. As indicated at block 508 the downlink message comprises a physical downlink control channel and the downlink resources comprise a physical downlink shared channel, where the downlink resources are assigned to all the transmission points participating in the joint cooperative multi-point transmission. According to block 510 the physical downlink control channel comprises a bitmap which maps to a cell identity of each of the transmission points. According to block 512 the physical downlink control channel comprises a bit value in a carrier identification field which maps to a cell identity of each of the transmission points. At block 515, the method according to Figure 5 further comprising rate matching the sent transmission around a common reference signals initialized with all of the identities of the downlink message. Further, according to block 520, the sent transmission as well as each other transmission point's transmission is scrambled and spread with codes initialized with one of the identities of the downlink message. It is noted that each of the transmission points as well as the apparatus comprise a network access node (block 522). According to block 524, where for a joint cooperative multi-point transmission with two or more cells resource elements are left unused in the physical downlink shared channel to enable a rate match of the two or more cells. In addition, where the unused resource elements are for transmission by any of the two or more cells of common reference signals. (block 530). Further, in the method as illustrated in Figure 5, the indication may be included in an extension of a carrier identification field of the signal. In addition, according to block 535, where the common reference signals comprise at least one of cell specific reference signals, positioning reference signals, channel state information reference signals, and multicast and/or multi-media broadcast over a single frequency network reference signals.

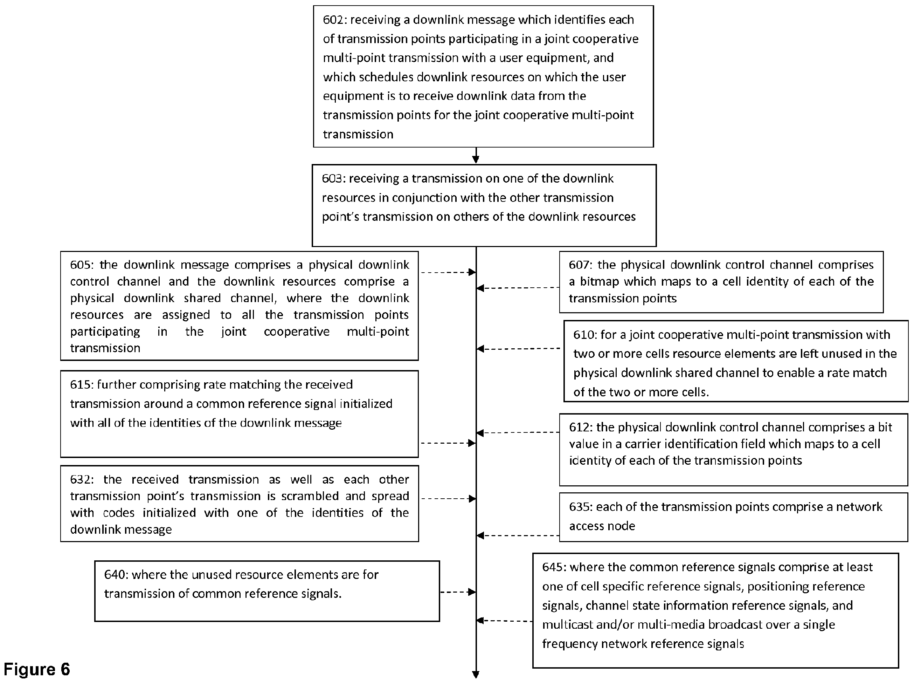

Similarly, Figure 6 is a block diagram illustrating a method and operations of an apparatus according to the exemplary embodiments of the invention. According to block 602 there is receiving, at a user equipment, a downlink message which identifies each of transmission points participating in a joint cooperative multi-point transmission with the user equipment, and which schedules downlink resources on which the user equipment is to receive downlink data from the transmission points for the joint cooperative multi-point transmission. Further, at block 603, there is receiving, at the user equipment, a transmission on one of the downlink resources in conjunction with the other transmission point's transmission on others of the downlink resources. According to block 605, the downlink message comprises a physical downlink control channel and the downlink resources comprise a physical downlink shared channel, where the downlink resources are assigned to all the transmission points participating in the joint cooperative multi-point transmission. And at block 607, the physical downlink control channel comprises a bitmap which maps to a cell identity of each of the transmission points. Further, as in block 610 for a joint cooperative multi-point transmission with two or more cells resource elements are left unused in the physical downlink shared channel to enable a rate match of the two or more cells. According to block 612, the physical downlink control channel comprises a bit value in a carrier identification field which maps to a cell identity of each of the transmission points. As indicated in block 615, the method as illustrated in Figure 6 further comprising rate matching the received transmission around common reference signals initialized with all of the identities of the downlink message. In addition, at block 632, the received transmission as well as each other transmission point's transmission is de-scrambled and de-spread with codes initialized with the one of the identities of the downlink message. As indicated in block 635, each of the transmission points comprises a network access node. In addition, as in block 640, where the unused resource elements are for transmission of common reference signals. Further, according to block 645, where the common reference signals comprise at least one of cell specific reference signals, positioning reference signals, channel state information reference signals, and multicast and/or multi-media broadcast over a single frequency network reference signals.

The various blocks shown in Figures 5 and 6 may be viewed as method steps, and/or as operations that result from operation of computer program code stored in a non-transitory computer-readable memory medium, and/or as a plurality of coupled logic circuit elements constructed to carry out the associated function(s).

The exemplary embodiments of the invention has several advantages including:
- enabling joint transmission CoMP operations with maximized synergy to carrier aggregation
- simplifying implementation of schedulers, signaling, etc.
- providing easy standardization of the embodiments as the supporting functionalities already exit.
- providing an efficient and robust solution from a downlink control signaling point of view
- avoiding interference to CRS/from CRS as well as the need to puncture data at the receiver and overall improving system performance

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. An apparatus, comprising:
means for determining each transmission point participating in a joint cooperative multi-point transmission (240) to a user equipment;
means for sending a downlink message to the user equipment which identifies each of the transmission points (250, 260), and which schedules for the user equipment downlink resources on which each of the transmission points are to send downlink data to the user equipment in the joint cooperative multi-point transmission (280, 290);
**characterized by** further comprising:
means for sending a transmission to the user equipment on one of the downlink resources (270) in conjunction with each other transmission point's transmission to the user equipment; and
means to cause the apparatus to further rate match the sent transmission around a common reference signal initialized with all of the identities of the downlink message (293).

2. The apparatus according to claim 1, in which the downlink message comprises a physical downlink control channel and the downlink resources comprise a physical downlink shared channel, where the downlink resources are assigned to all transmission points participating in the joint cooperative multi-point transmission, where for a joint cooperative multi-point transmission with two or more cells resource elements are left unused in the physical downlink shared channel to enable a rate match of the two or more cells.

3. The apparatus according to claim 2, where the unused resource elements are for transmission by any of the two or more cells of common reference signals.

4. The apparatus according to any of claims 1 to 3, in which the sent transmission as well as each other transmission point's transmission is scrambled and spread with codes initialized with one of the identities of the downlink message.

5. A method, comprising:
determining each transmission point participating in a joint cooperative multi-point transmission to a user equipment;
sending a downlink message to the user equipment which identifies each of the transmission points, and which schedules for the user equipment downlink resources on which each of the transmission points are to send downlink data to the user equipment in the joint cooperative multi-point transmission; and
sending a transmission to the user equipment on one of the downlink resources in conjunction with each other transmission point's transmission to the user equipment;
the method further **characterized by** the step of:
rate matching the sent transmission around a common reference signal initialized with all of the identities of the downlink message.

6. The method according to claim 5, in which the downlink message comprises a physical downlink control channel and the downlink resources comprise a physical downlink shared channel, where the downlink resources are assigned to all transmission points participating in the joint cooperative multi-point transmission, where for a joint cooperative multi-point transmission with two or more cells resource elements are left unused in the physical downlink shared channel to enable a rate match of the two or more cells.

7. The method according to claim 6, where the unused resource elements are for transmission by any of the two or more cells of common reference signals.

8. The method according to any of claims 5 to 7, in which the sent transmission as well as each other transmission point's transmission is scrambled and spread with codes initialized with one of the identities of the downlink message.

9. At least one computer readable medium including at least one computer program code executable by at least one processor to perform the method as in any one of claims 5 to 8.

10. An apparatus, comprising:
means for receiving a downlink message which identifies each of transmission points participating in a joint cooperative multi-point transmission with a user equipment, and which schedules downlink resources on which the user equipment is to receive downlink data from the transmission points for the joint cooperative multi-point transmission; and
means for receiving a transmission on one of the downlink resources in conjunction with the other transmission point's transmission;
**characterized by** further comprising:
means to cause the apparatus to further rate match the received transmission around a common reference signal initialized with all of the identities of the downlink message.

11. The apparatus according to claim 10, in which the downlink message comprises a physical downlink control channel and the downlink resources comprise a physical downlink shared channel, where the downlink resources are assigned to all transmission points participating in the joint cooperative multi-point transmission, where for a joint cooperative multi-point transmission with two or more cells resource elements are left unused in the physical downlink shared channel to enable a rate match of the two or more cells.

12. The apparatus according to claim 11, where the unused resource elements are for transmission by any of the two or more cells of common reference signals.

13. The apparatus according to any one of claims 10 to 12, in which the received transmission as well as each other transmission point's transmission is scrambled and spread with codes initialized with one of the identities of the downlink message.

14. A method, comprising:
receiving a downlink message which identifies each of transmission points participating in a joint cooperative multi-point transmission with a user equipment, and which schedules downlink resources on which the user equipment is to receive downlink data from the transmission points for the joint cooperative multi-point transmission; and
receiving a transmission on one of the downlink resources in conjunction with the other transmission point's transmission;
the method further **characterized by** the step of:
comprising rate matching the received transmission around a common reference signal initialized with all of the identities of the downlink message.

15. The method according to claim 14, in which the downlink message comprises a physical downlink control channel and the downlink resources comprise a physical downlink shared channel, where the downlink resources are assigned to all the transmission points participating in the joint cooperative multi-point transmission, where for a joint cooperative multi-point transmission with two or more cells resource elements are left unused in the physical downlink shared channel to enable a rate match of the two or more cells.

16. The method according to claim 15, where the unused resource elements are for transmission by any of the two or more cells of common reference signals.

17. The method according to any of claims 14 to 16, in which the received transmission as well as each other transmission point's transmission is scrambled and spread with codes initialized with one of the identities of the downlink message.

18. At least one computer readable medium including at least one computer program code executable by at least one processor to perform the method as in any one of claims 14 to 17.

## Patentansprüche

1. Vorrichtung, umfassend:
Mittel zum Bestimmen jedes Übertragungspunkts, der an einer gemeinsamen, kooperierenden Mehrpunkt-Übertragung (240) an eine Benutzerausrüstung teilnimmt;
Mittel zum Senden einer Abwärtsstreckennachricht an die Benutzerausrüstung, die jeden der Übertragungspunkte identifiziert (250, 260) und die für die Benutzerausrüstung Abwärtsstrecken-Betriebsmittel terminiert, auf denen jeder der Übertragungspunkte Abwärtsstreckendaten an die Benutzerausrüstung in der gemeinsamen, kooperierenden Mehrpunkt-Übertragung zu senden hat (280, 290);
**dadurch gekennzeichnet, dass** sie ferner umfasst:
Mittel zum Senden einer Übertragung an die Benutzerausrüstung auf einer der Abwärtsstrecken-Betriebsmittel (270) in Verbindung mit der Übertragung jedes anderen Übertragungspunkts an die Benutzerausrüstung; und
Mittel zum Bewirken, dass die Vorrichtung ferner die gesandte Übertragung um ein allgemeines Referenzsignal, initialisiert mit sämtlichen der Identitäten der Abwärtsstreckennachricht, in der Rate anpasst (293).

2. Vorrichtung nach Anspruch 1, wobei die Abwärtsstreckennachricht einen physikalischen Abwärtsstrecken-Steuerkanal umfasst und die Abwärtsstrecken-Betriebsmittel einen physikalischen, gemeinsam genutzten Abwärtsstreckenkanal umfassen, wobei die Abwärtsstrecken-Betriebsmittel sämtlichen der Übertragungspunkte, die an der gemeinsamen, kooperierenden Mehrpunkt-Übertragung teilnehmen, zugewiesen sind, wobei für eine gemeinsame, kooperierende Mehrpunkt-Übertragung mit zwei oder mehr Zellen Betriebsmittelelemente in dem physikalischen, gemeinsam genutzten Abwärtsstreckenkanal ungenutzt gelassen werden, um eine Anpassung der Rate der zwei oder mehr Zellen zu gestatten.

3. Vorrichtung nach Anspruch 2, wobei die nicht genutzten Betriebsmittelelemente für Übertragung allgemeiner Referenzsignale durch beliebige der zwei oder mehr Zellen sind.

4. Vorrichtung nach einem der Ansprüche 1 bis 3, wobei die gesandte Übertragung sowie die Übertragung jedes anderen Übertragungspunkts mit Codes, die mit einer der Identitäten der Abwärtsstreckennachricht initialisiert werden, verwürfelt und gespreizt werden.

5. Verfahren, umfassend:
Bestimmen jedes Übertragungspunkts, der an einer gemeinsamen, kooperierenden Mehrpunkt-Übertragung an eine Benutzerausrüstung teilnimmt;
Senden einer Abwärtsstreckennachricht an die Benutzerausrüstung, die jeden der Übertragungspunkte identifiziert und die für die Benutzerausrüstung Abwärtsstrecken-Betriebsmittel terminiert, auf denen jeder der Übertragungspunkte Abwärtsstreckendaten an die Benutzerausrüstung in der gemeinsamen, kooperierenden Mehrpunkt-Übertragung zu senden hat; und
Senden einer Übertragung an die Benutzerausrüstung auf einer der Abwärtsstrecken-Betriebsmittel in Verbindung mit der Übertragung jedes anderen Übertragungspunkts an die Benutzerausrüstung;
das Verfahren ferner **gekennzeichnet durch** den folgenden Schritt:
Anpassen der Rate der gesandten Übertragung um ein allgemeines Referenzsignal, initialisiert mit sämtlichen der Identitäten der Abwärtsstreckennachricht.

6. Verfahren nach Anspruch 5, wobei die Abwärtsstreckennachricht einen physikalischen Abwärtsstrecken-Steuerkanal umfasst und die Abwärtsstrecken-Betriebsmittel einen physikalischen, gemeinsam genutzten Abwärtsstreckenkanal umfassen, wobei die Abwärtsstrecken-Betriebsmittel sämtlichen der Übertragungspunkte, die an der gemeinsamen, kooperierenden Mehrpunkt-Übertragung teilnehmen, zugewiesen sind, wobei für eine gemeinsame, kooperierende Mehrpunkt-Übertragung mit zwei oder mehr Zellen Betriebsmittelelemente in dem physikalischen, gemeinsam genutzten Abwärtsstreckenkanal ungenutzt gelassen werden, um eine Anpassung der Rate der zwei oder mehr Zellen zu gestatten.

7. Verfahren nach Anspruch 6, wobei die nicht genutzten Betriebsmittelelemente für Übertragung allgemeiner Referenzsignale durch beliebige der zwei oder mehr Zellen sind.

8. Verfahren nach einem der Ansprüche 5 bis 7, wobei die gesandte Übertragung sowie die Übertragung jedes anderen Übertragungspunkts mit Codes, die mit einer der Identitäten der Abwärtsstreckennachricht initialisiert werden, verwürfelt und gespreizt werden.

9. Mindestens ein computerlesbares Medium, enthaltend mindestens einen Computerprogrammcode, der durch mindestens einen Prozessor ausführbar ist, um das Verfahren nach einem der Ansprüche 5 bis 8 durchzuführen.

10. Vorrichtung, umfassend:
Mittel zum Empfangen einer Abwärtsstreckennachricht, die jeden von Übertragungspunkten, die an einer gemeinsamen, kooperierenden Mehrpunkt-Übertragung mit einer Benutzerausrüstung teilnehmen, identifizieren und die Abwärtsstrecken-Betriebsmittel, auf denen die Benutzerausrüstung Abwärtsstreckendaten von den Übertragungspunkten für die gemeinsame, kooperierende Mehrpunkt-Übertragung zu empfangen hat, terminieren; und
Mittel zum Empfangen einer Übertragung auf einer der Abwärtsstrecken-Betriebsmittel in Verbindung mit der Übertragung des anderen Übertragungspunkts;
**dadurch gekennzeichnet, dass** sie ferner umfasst:
Mittel zum Bewirken, dass die Vorrichtung ferner die empfangene Übertragung um ein allgemeines Referenzsignal, initialisiert mit sämtlichen der Identitäten der Abwärtsstreckennachricht, in der Rate anpasst.

11. Vorrichtung nach Anspruch 10, wobei die Abwärtsstreckennachricht einen physikalischen Abwärtsstrecken-Steuerkanal umfasst und die Abwärtsstrecken-Betriebsmittel einen physikalischen, gemeinsam genutzten Abwärtsstreckenkanal umfassen, wobei die Abwärtsstrecken-Betriebsmittel sämtlichen der Übertragungspunkte, die an der gemeinsamen, kooperierenden Mehrpunkt-Übertragung teilnehmen, zugewiesen sind, wobei für eine gemeinsame, kooperierende Mehrpunkt-Übertragung mit zwei oder mehr Zellen Betriebsmittelelemente in dem physikalischen, gemeinsam genutzten Abwärtsstreckenkanal ungenutzt gelassen werden, um eine Anpassung der Rate der zwei oder mehr Zellen zu gestatten.

12. Verfahren nach Anspruch 11, wobei die nicht genutzten Betriebsmittelelemente für Übertragung allgemeiner Referenzsignale durch beliebige der zwei oder mehr Zellen sind.

13. Vorrichtung nach einem der Ansprüche 10 bis 12, wobei die empfangene Übertragung sowie die Übertragung jedes anderen Übertragungspunkts mit Codes, die mit einer der Identitäten der Abwärtsstreckennachricht initialisiert werden, verwürfelt und gespreizt werden.

14. Verfahren, umfassend:
Empfangen einer Abwärtsstreckennachricht, die jeden von Übertragungspunkten, die an einer gemeinsamen, kooperierenden Mehrpunkt-Übertragung mit einer Benutzerausrüstung teilnehmen, identifizieren und die Abwärtsstrecken-Betriebsmittel, auf denen die Benutzerausrüstung Abwärtsstreckendaten von den Übertragungspunkten für die gemeinsame, kooperierende Mehrpunkt-Übertragung zu empfangen hat, terminieren; und
Empfangen einer Übertragung auf einer der Abwärtsstrecken-Betriebsmittel in Verbindung mit der Übertragung des anderen Übertragungspunkts;
das Verfahren ferner durch den folgenden Schritt gekennzeichnet:
Umfassen von Anpassung der Rate der empfangenen Übertragung um ein allgemeines Referenzsignal, initialisiert mit sämtlichen der Identitäten der Abwärtsstreckennachricht.

15. Verfahren nach Anspruch 14, wobei die Abwärtsstreckennachricht einen physikalischen Abwärtsstrecken-Steuerkanal umfasst und die Abwärtsstrecken-Betriebsmittel einen physikalischen, gemeinsam genutzten Abwärtsstreckenkanal umfassen, wobei die Abwärtsstrecken-Betriebsmittel sämtlichen der Übertragungspunkte, die an der gemeinsamen, kooperierenden Mehrpunkt-Übertragung teilnehmen, zugewiesen sind, wobei für eine gemeinsame, kooperierende Mehrpunkt-Übertragung mit zwei oder mehr Zellen Betriebsmittelelemente in dem physikalischen, gemeinsam genutzten Abwärtsstreckenkanal ungenutzt gelassen werden, um eine Anpassung der Rate der zwei oder mehr Zellen zu gestatten.

16. Verfahren nach Anspruch 15, wobei die nicht genutzten Betriebsmittelelemente für Übertragung allgemeiner Referenzsignale durch beliebige der zwei oder mehr Zellen sind.

17. Verfahren nach einem der Ansprüche 14 bis 16, wobei die empfangene Übertragung sowie die Übertragung jedes anderen Übertragungspunkts mit Codes, die mit einer der Identitäten der Abwärtsstreckennachricht initialisiert werden, verwürfelt und gespreizt werden.

18. Mindestens ein computerlesbares Medium, enthaltend mindestens einen Computerprogrammcode, der durch mindestens einen Prozessor ausführbar ist, um das Verfahren nach einem der Ansprüche 14 bis 17 durchzuführen.

## Revendications

1. Appareil, comprenant :
des moyens pour déterminer chaque point de transmission participant à une transmission multipoint coopérative conjointe (240) vers un équipement utilisateur ;
des moyens pour envoyer un message de liaison descendante à l'équipement utilisateur qui identifie chacun des points de transmission (250, 260) et qui programme pour l'équipement utilisateur des ressources de liaison descendante sur lesquelles chacun des points de transmission doit envoyer des données de liaison descendante à l'équipement utilisateur dans la transmission multipoint coopérative conjointe (280, 290) ;
**caractérisé en ce qu'**il comprend en outre :
des moyens pour envoyer une transmission à l'équipement utilisateur sur l'une des ressources de liaison descendante (270) en conjonction avec chaque transmission d'un autre point de transmission vers l'équipement utilisateur ; et
des moyens pour amener l'appareil à en outre faire correspondre le débit de la transmission envoyée autour d'un signal de référence commun initialisé avec toutes les identités du message de liaison descendante (293).

2. Appareil selon la revendication 1, dans lequel le message de liaison descendante comprend un canal de commande de liaison descendante physique et les ressources de liaison descendante comprennent un canal partagé de liaison descendante physique, où les ressources de liaison descendante sont affectées à tous les points de transmission participant à la transmission multipoint coopérative conjointe, où, pour une transmission multipoint coopérative conjointe avec deux cellules, ou davantage, des éléments de ressources sont laissées inutilisés dans le canal partagé de liaison descendante physique pour permettre une correspondance de débit des deux cellules, ou davantage.

3. Appareil selon la revendication 2, dans lequel les éléments de ressources non utilisés sont destinés à une transmission de signaux de référence communs par l'une quelconque des deux cellules, ou davantage.

4. Appareil selon l'une quelconque des revendications 1 à 3, dans lequel la transmission envoyée ainsi que chaque transmission d'un autre point de transmission sont brouillées et diffusées avec des codes initialisés par une des identités du message de liaison descendante.

5. Procédé, comprenant les étapes suivantes :
déterminer chaque point de transmission participant à une transmission multipoint coopérative conjointe vers un équipement utilisateur ;
envoyer un message de liaison descendante à l'équipement utilisateur qui identifie chacun des points de transmission, et qui programme pour l'équipement utilisateur des ressources de liaison descendante sur lesquelles chacun des points de transmission doit envoyer des données de liaison descendante à l'équipement utilisateur dans la transmission multipoint coopérative conjointe ; et
envoyer une transmission à l'équipement utilisateur sur l'une des ressources de liaison descendante en conjonction avec chaque transmission d'un autre point de transmission vers l'équipement utilisateur ;
le procédé étant en outre **caractérisé par** l'étape comprenant à :
faire correspondre le débit de la transmission envoyée autour d'un signal de référence commun initialisé avec toutes les identités du message de liaison descendante.

6. Procédé selon la revendication 5, dans lequel le message de liaison descendante comprend un canal de commande de liaison descendante physique et les ressources de liaison descendante comprennent un canal partagé de liaison descendante physique, où les ressources de liaison descendante sont affectées à tous les points de transmission participant à la transmission multipoint coopérative conjointe, où, pour une transmission multipoint coopérative conjointe avec deux cellules, ou davantage, des éléments de ressources sont laissées inutilisés dans le canal partagé de liaison descendante physique pour permettre une correspondance de débit des deux cellules, ou davantage.

7. Procédé selon la revendication 6, dans lequel les éléments de ressources non utilisés sont destinés à une transmission de signaux de référence communs par l'une quelconque des deux cellules, ou davantage.

8. Procédé selon l'une quelconque des revendications 5 à 7, dans lequel la transmission envoyée ainsi que chaque transmission d'un autre point de transmission sont brouillées et diffusées avec des codes initialisés par une des identités du message de liaison descendante.

9. Au moins un support lisible par ordinateur comprenant au moins un code de programme informatique exécutable par au moins un processeur pour exécuter le procédé selon l'une quelconque des revendications 5 à 8.

10. Appareil, comprenant :
des moyens pour recevoir un message de liaison descendante qui identifie chacun des points de transmission participant à une transmission multipoint coopérative conjointe avec un équipement utilisateur, et qui programme des ressources de liaison descendante sur lesquelles l'équipement utilisateur doit recevoir des données de liaison descendante depuis les points de transmission pour la transmission multipoint coopérative conjointe ; et
des moyens pour recevoir une transmission sur une des ressources de liaison descendante en conjonction avec la transmission d'un autre point de transmission ;
**caractérisé en ce qu'**il comprend en outre :
des moyens pour amener l'appareil à en outre faire correspondre la transmission reçue autour d'un signal de référence commun initialisé avec toutes les identités du message de liaison descendante.

11. Appareil selon la revendication 10, dans lequel le message de liaison descendante comprend un canal de commande de liaison descendante physique et les ressources de liaison descendante comprennent un canal partagé de liaison descendante physique, où les ressources de liaison descendante sont affectées à tous les points de transmission participant à la transmission multipoint coopérative conjointe où, pour une transmission multipoint coopérative conjointe avec deux cellules, ou davantage, des éléments de ressources sont laissés inutilisés dans le canal partagé de liaison descendante physique pour permettre une correspondance de débit des deux cellules, ou davantage.

12. Appareil selon la revendication 11, dans lequel les éléments de ressources non utilisés sont destinés à une transmission de signaux de référence communs par l'une quelconque des deux cellules, ou davantage.

13. Appareil selon l'une quelconque des revendications 10 à 12, dans lequel la transmission reçue ainsi que chaque transmission d'un autre point de transmission sont brouillées et diffusées avec des codes initialisés par une des identités du message de liaison descendante.

14. Procédé, comprenant les étapes suivantes :
recevoir un message de liaison descendante qui identifie chacun des points de transmission participant à une transmission multipoint coopérative conjointe avec un équipement utilisateur, et qui programme des ressources de liaison descendante sur lesquelles l'équipement utilisateur doit recevoir des données de liaison descendante depuis les points de transmission pour la transmission multipoint coopérative conjointe ; et
recevoir une transmission sur l'une des ressources de liaison descendante en conjonction avec la transmission de l'autre point de transmission ;
le procédé étant en outre **caractérisé par** l'étape suivants :
faire correspondre le débit de la transmission reçue autour d'un signal de référence commun initialisé avec toutes les identités du message de liaison descendante.

15. Procédé selon la revendication 14, dans lequel le message de liaison descendante comprend un canal de commande de liaison descendante physique et les ressources de liaison descendante comprennent un canal partagé de liaison descendante physique, où les ressources de liaison descendante sont affectées à tous les points de transmission participant à la transmission multipoint coopérative conjointe où, pour une transmission multipoint coopérative conjointe avec deux cellules, ou davantage, des éléments de ressources sont laissées inutilisés dans le canal partagé en liaison descendante physique pour permettre une correspondance de débit des deux cellules, ou davantage.

16. Procédé selon la revendication 15, dans lequel les éléments de ressources inutilisés sont destinés à une transmission de signaux de référence communs par l'une quelconque des deux cellules, ou davantage.

17. Procédé selon l'une quelconque des revendications 14 à 16, dans lequel la transmission reçue ainsi que chaque transmission d'un autre point de transmission sont brouillées et diffusées avec des codes initialisés par une des identités du message de liaison descendante.

18. Au moins un support lisible par ordinateur comprenant au moins un code de programme informatique exécutable par au moins un processeur pour exécuter le procédé selon l'une quelconque des revendications 14 à 17.
